# EUROPEAN PATENT SPECIFICATION

(11) **EP 1 199 942 B1**
(45) Date of publication and mention of the grant of the patent: **12.03.2003**
(21) Application number: 00944206.2
(22) Date of filing: 31.03.2000
(51) Int. Cl.: A21D 13/00, A21D 13/04, A21D 13/06, A21D 8/00, A21D 2/26, A23L 1/03, A23L 1/10, A23L 1/164, A23L 1/303

(54) **HIGHLY NUTRITIOUS CEREAL BASED FOOD**
GETREIDENAHRUNGSMITTEL MIT HOHEM NÄHRWERT
PRODUIT ALIMENTAIRE TRES NUTRITIF A BASE DE CEREALES

(43) Date of publication of application: 02.05.2002
(73) Proprietor: Council of Scientific and Industrial Research, New Delhi 110 001 (IN)
(72) Inventor: MANOHAR, Ragu, Sai, Mysore 570 013 (IN); LEELAVATHI, Krishnarau, Mysore 570 013 (IN); SWAMILINGAPPA, Bhagya, Mysore 570 013 (IN); RAO, Punaroor, Haridas, Mysore 570 013 (IN); PRAKASH, Vishweshwaraiah, Mysore 570 013 (IN)
(74) Representative: Moinas, Michel
(86) International application number: IN0000040
(87) International publication number: WO01074169

(56) References cited:
- GB-A- 2 120 522
- US-A- 5 631 032
- DATABASE WPI Derwent Publications Ltd., London, GB; AN 1994-270268 XP002154867 & RU 2 007 087 A (PROIZV KONDITERSKIKH IZDELIJ K, CHIPA FA ), 12 February 1994 (1994-02-12)

## Description

### Field

The invention relates to a high protein nutritive cereal based food composition. Particularly, the invention relates to a process for the preparation of the cereal products prepared by the process of the present invention contain protein content of the order about 14%.

### Background

Bakery products are increasingly becoming popular in India as indicated by an increase in its production from 1.9 million metric tons to 3.1 million metric tons during the last 10 years. It is estimated that biscuit market is growing at a rate of 7% per year. About 1.2 million metric tons of biscuits are manufactured by both the organized and unorganized sectors in India with an annual turnover of more than 2000 crores. Among the processed ready-to-eat convenient products, biscuits are the relatively lower cost processed foods. Besides, it has several other advantages such as long shelf life, easy availability in different tastes, flavour and texture and hence preferred by all cross section of the population. GB-A-2 120 522 discloses a process for producing biscuits.

Nearly 50-55% of the total biscuits produced in India belong to sweet variety indicating its popularity amongst different sections of the population. Normal sweet type of biscuits contain 5-6% protein whereas high protein biscuits has a protein content ranging between 12-13%. Many a times the biscuits are also fortified with thiamine, riboflavin, nicotinic acid, vitamin 'A', vitamin 'D' and calcium to improve its nutritional quality. Protein rich biscuits have been found to be useful in diet therapy for treating of nutritional oedema syndrome and malnutrition in children. Hence high protein biscuits can be an excellent nutritional snack food vehicle with a high degree of acceptability especially to children.

Subrahmanyan et al (Subrahmanyan, V., Bains, G.S., Bhatia, D.S., and Swaminathan, M. 1958 Manufacture of Nutro Biscuits Research and IndustryVol.3, 178-179) had developed a technology for manufacture of "Nutro Biscuits". The biscuit contained 15-16% protein and was fortified with calcium and vitamins. The high protein content in the biscuit was achieved by replacing 40% of wheat flour with defatted food grade groundnut flour.

The normal sweet type biscuits contain around 5-6% protein. The "nutro" biscuits developed earlier (Subrahmanyan et al 1958) even though contains about 15% protein, the quality of the protein has been found to be poor as groundnut proteins are deficient in the essential amino acid lysine. The biscuits were also reported to have low protein efficiency ratio of 1.3 (Subrahmanyan et al 1958). Besides, defatted edible groundnut flour is relatively expensive.

Hitherto known processes for sweet type biscuits has a protein content of 5-6% and hence are not ideally suited for various nutritional programmes and therapeutic uses. White high protein biscuits containing soy flour could have a quality protein content of about 13%. Soya proteins contain most of the essential amino acids, including lysine, in right proportions (Prakash, V., and Narasinga Rao, M.S. 1986. Physico chemical properties of oilseed proteins. CRS\C Review in Biochemistry. CRC Press Inc. USA. Vol.22, 1-134).

Accordingly, the applicants have developed a novel process for the preparation of based food composition, obviating the drawbacks of the prior art processes.

### Objects

The main object of the present invention is to provide an improved process for the preparation of highly nutritious cereal based food composition.

Another object of the present invention is to use defatted soya flour as a source of protein.

Yet another object of the present invention is to provide a process wherein the protein content in the food composition is enzymatically modified to improve digestibility.

Still another object is to provide a food composition having highly acceptable taste, flavour and improved texture.

### Summary of the invention

To meet the above objects, the present invention relates to proteins present in the food composition, modified with enzymes is of utmost importance to improve its digestibility and nutritional availability of amino acids and peptides at a rapid rate. In addition, the invention provides a method of manufacturing a high protein nutritive cereal based food composition comprising appropriate amounts of wheat flour, defatted soya flour, sugar, fat enzymes, vitamins, antioxidants and other conventional additives such as flavouring agent, coloring agent, etc.

### Detailed description

The invention basically provides a high protein nutritive cereal based food composition comprising appropriate amounts of wheat flour, defatted soya flour, sugar, fat enzymes, vitamins, antioxidants and other conventional additives such as flavouring agent, coloring agent, etc. and a process for preparing the composition. In the process of the present invention, defatted edible soya flour is used as a source of protein. The protein content of the food composition prepared using defatted soya flour conforms to Bureau of Indian Standards (BIS) specification (13%). According to BIS specification edible soya flour should be white to pale creamy white in colour with pleasant aroma and characteristic flavour. In the present process for the production of nutritious high protein food composition, the protein content is enzymatically modified to improve the digestibility and addition to the enzyme premix and soya flour at the appropriate unit operation to bring in the right texture and improvement in the quality of the product. The food composition made according to the above modification in the process has a highly acceptable taste, flavour with an improved texture.

Proteins present in the food composition, modified with enzymes is of utmost importance to improve its digestibility and nutritional availability of amino acids and peptides at a rapid rate.

Hence the nutritional quality of the biscuit improved by addition of the enzyme alkaline protease and papain and its addition at the appropriate unit operation is the main novelty of this patent. Incorporation of the enzyme improves the digestibility as well as functional characteristics and flavour of the food composition. It also subsequently helps in better absorption of the proteins. Incorporation of enzymes in the food composition results in improvement in texture and colour of the product also as it increases the total protein content to about 14% from about 6%.

Accordingly, the present invention provides the high protein nutritive cereal based food composition, comprising appropriate amount of wheat flour, defatted soya flour, sugar, fat, other conventional additives, characterized in that enzymes, vitamins and antioxidant based on per 100gm of wheat flour and defatted soya flour blend are present in order of:

| **Enzymes** | |
|---|---|
| Papain (mg) (tyrosine unit/g powder) | 0.20 to 0.30 |
| Alkaline protease (mg) (tyrosine unit/g powder) | 0.10 to 0.15 |

| **Vitamins** | |
|---|---|
| Thiamine hydrochloride (mg) | 4.00 to 4.20 |
| Riboflavin (mg) | 1.40 to 1.60 |
| Nicotinic acid (mg) | 18.00 to 22.00 |
| Vitamin A (acetate or palminate) (mg) | 4.00 to 6.50 |
| Vitamin D (Calciferol) (ug) | 0.25 to 0.35 |

| **Antioxidant** | |
|---|---|
| Butylated Hydroxy Anisole (BHA) (mg) | 0.40 to 0.55 |

One another embodiment of the present invention provides an improved process for the preparation of high protein nutritious cereal based food composition, which comprises:
i) creaming fat, antioxidant sugar, corn syrup, emulsifier, flavouring agents and fat soluble vitamins;
ii) preparing an aqueous suspension containing milk powder, common salt, ammonium bicarbonate, sodium bicarbonate and acid calcium phosphate, adding to the above cream obtained in step (i) and mixing for a period of 5-8 minutes;
iii) adding a flour blend containing wheat flour, defatted soy flour, vitamins, calcium carbonate and enzyme premix to the above cream obtained in step (ii) and mixing the resulting mass into a dry crumbly dough;
iv) resting the dough obtained in step (iii) for a period of 28-33 minutes;
v) shaping the dough using conventional rotary moulder;
vi) baking the moulded dough obtained in step (v);
vii) cooling the baked product obtained in step (vi) to obtain highly nutritious food composition.

Still another embodiment of the present invention relates to creaming in step (i) is effected for a period in the range of 15-20 minutes.

Yet another embodiment of the present invention relates to mixing in step (ii) is effected for a period in the range of 5-8 minutes.

Still another embodiment of the present invention relates to mixing in step (iii) is effected for a period in the range of 4-10 minutes.

One more embodiment of the present invention relates to the backing of the products obtained in step (vi) is effected by maintaining a temperature in the range of

150-180°C of first zone, 200-260°C of second zone and 150-180°C of third zone for a total period of 4-6 minutes.

The enzyme premix used is such as 0.20 to 0.30 mg% of papain having papain activity in the range of 1,80,000 to 1,88,000 Tyrosine unit/g of powder and 0.10 to 0.15 mg% of Alkaline protease having alkaline protease activity in the range of 30,000 to 36,000 Tyrosine unit/g of powder.

The Wt% of the ingredients in kg used are:

| | Wt% |
|---|---|
| Wheat flour | 75.0 to 80.0 |
| Soya flour (defatted) | 20.0 to 26.0 |
| Sugar (powdered) | 40.0 to 48.0 |
| Fat | 20.0 to 26.0 |
| Lecithin | 0.3 to 0.5 |
| Corn syrup | 1.0 to 3.0 |
| Calcium carbonate | 0.50 to 1.00 |
| Common salt | 0.80 to 1.10 |
| Ammonium bicarbonate | 0.90 to 1.10 |
| Sodium bicarbonate | 0.40 to 0.55 |
| Acid calcium phosphate | 0.50 to 0.60 |
| Skimmed milk powder | 1.50 to 2.50 |
| Water | 18 to 20 ml |

| **Enzymes** | |
|---|---|
| Papain (mg) | 0.20 to 0.30 |
| Papain Activity (Tyrosine Unit / g powder) | 1,80,000 - 1,88,000 |
| Alkaline protease (mg) | 0.10 to 0.15 |
| Alkaline protease Activity (Tyrosine Unit / g powder) | 30,000 - 36,000 |

| **Vitamins** | |
|---|---|
| Thiamine hydrochloride (mg) | 4.00 to 4.20 |
| Riboflavin (mg) | 1.40 to 1.60 |
| Nicotinic acid (mg) | 18.00 to 22.00 |
| Vitamin A (acetate or palminate) (mg) | 4.00 to 6.50 |
| Vitamin D (Calciferol) (ug) | 0.25 to 0.35 |

| **Antioxidant** | |
|---|---|
| Butylated Hydroxy Anisole (BHA) (mg) | 0.40 to 0.55 |

| **Flavouring agents** | |
|---|---|
| Fruit based flavours | as per Prevention of Food Adulteration Act |
| Total dry matter (kg) | 151.24 - 176.56 |
| Moisture in biscuits (kg) | 4.96 - 4.96 |
| | 156.20- 181.52 |
| Production loss (0.5% kg) | 0.78 - 0.91 |
| Production loss of aerating chemicals (0.75%, Kg) | 1.10 - 1.38 |
| Process deficit (0.5%, Kg) | 0.32 - 0.37 |
| Yield (kg) of biscuits per 100kg flour blend | 154.00 - 176.03 |
| Equivalent to a total dough weight of | 160.00 - 190.00 Kg |

The creaming in step (i) is effected for a period in the range of 15-20 minutes.

The mixing in step (ii) is effected for a period in the range of 5-8 minutes.

The mixing in step (iii) is effected for a period in the range of 4-10 minutes.

The baking of food composition in step (vi) is effected by maintaining a temperature in the range of 150-180°C of first zone, 200-260°C of second zone and 150-180°C of third zone for a total period of 4-6 minutes.

The details of the different operations in the process of the present invention are :-

### Sieving of flour and scaling of ingredients:

Flour is sieved to remove impurities, provide aeration and homogenisation. All the ingredients are weighed according to the formulation.

### Preparation of wheat flour-soy flour blend:

Wheat flour is blended with soya flour and sieved to achieve uniform mixing.

### Preparation of premix:

About 100 - 200g flour may be thoroughly mixed and blended with thiamine, riboflavin, nicotinic acid, calcium carbonate, and the enzymes.

### Creaming:

Fat, BHA, sugar powder, corn syrup, emulsifier, vitamin A, vitamin D and flavouring agents are creamed so as to thoroughly blend the components and aerate the mixture.

### Mixing:

Common salt ammonium bicarbonate and sodium bicarbonate in water is added to the above cream. Milk powder suspension in water also added to the above cream. This is followed by addition of Acid calcium phosphate dispersed in small portion of formula water. Mixture is mixed into a homogenous paste.

### Dough Mixing:

Wheat flour - soy flour blend and vitamin - enzyme premix are added to the above cream mixture to form a homogenous dough.

### Dough Resting:

The above dough may be rested for about 28 - 33 minutes at 28 - 32°C.

### Sheeting and Moulding:

Sheeting and moulding of the dought is done in a rotary biscuit moulder using a circular die of about 4.5 mm diameter or as desired.

### Baking:

Biscuits may be baked in a continuous tunnel type oven. Temperature range should be between 150-260°C. Baking time should be between 4-6 minutes.

### Cooling:

Biscuits are cooled to room temperature.

### Packing:

Biscuits are either bulk packed in High Molecular High Density Polyethylene (HMHDPE) or in small unit packs in HMHDPE or in pearlized Biaxilary Oriented Poly Propylene (BOPP).

### Weight of the ingredients used

The ingredients mentioned in the formulation (page 6) are expressed on % based on flour weight basis. In this case, it is the weight of wheat flour and defatted soya flour blend. The weight of blend of wheat and defatted soya flour is taken as 100g. The other ingredients particularly enzymes, vitamins and antioxidants shown are for 100g of the blend.
1. The international units are given below for enzymes, vitamin A and Vitamin D, Thiamine, riboflavin, miacin are normally indicated as mg. The details are given below:
For 100g of blend of wheat flour and soya flour.

| **Enzymes** | |
|---|---|
| Papain (Tyrosine units) | 36 to 60 |
| Alkaline protease (Tyrosine units) | 3 to 6 |

| **Vitamins** | |
|---|---|
| Thiamine hydrochloride (mg) | 4.0 to 4.2 |
| Riboflavin (mg) | 1.4 to 1.6 |
| Nicotinic acid (mg) | 18.0 to 22.06 |
| Vitamin A (Acetate or palmitate (IU) | 1400 to 2200 |
| Vitamin D (IU) | 10 to 14 |

### 3. Uniqueness of incorporation of proteolytic enzymes

Wheat flour is normally treated with enzymes for improving the dough characteristics as well as quality of the bread. Alpha-amylase is normally used in flour. It helps in increased leavening of bread resulting in softer texture. This enzyme is also used in cereal based weaning foods and beverages to facilitate use of maximum quantity of the product in a limited quantity of water without considerable increase in viscosity.

In the formulation given for high protein nutritious biscuits, both papain as well as alkaline protease have been used. The purpose of incorporating proteolytic enzymes is to modify the proteins through partial hydrolysis. These partially hydrolysed proteins are more digestible and have better absorption in the human system. This is particularly required as the product has high protein content achieved through incorporation of soya flour. Incorporation of these enzymes into dough, hydrolyse the protein of soya flour as well as that present in wheat flour and hence improve the nutritional quality of biscuits.

The following examples are given by way of illustration.

The formulation used in the following example is :

| **Ingredient** | **Quantity** (g) |
|---|---|
| Wheat flour | 150.0 |
| Soya flour (defatted) | 50.0 |
| Sugar (powder) | 90.0 |
| Fat | 50.0 |
| Lecithin | 0.8 |
| Corn syrup | 4.0 |
| Calcium carbonaste | 2.0 |
| Common salt | 2.0 |
| Ammonium bicarbonate | 2.0 |
| Sodium bicarbonate | 1.0 |
| Acid calcium phosphate | 1.0 |
| Skimmed milk powder | 4.0 |
| Thiamine (mg) | 8.2 |
| Riboflavin (mg) | 3.0 |
| Nicotinic acid (mg) | 40.0 |
| Vitamin A (acetate of palmitate, mg) | 115.0 |
| Butylated Hydroxy Anisole (BHA, mg) | 0.6 |
| Flavours | to desired level |
| Water | 40.0 ml |

### Example 1

50 g of soy flour was mixed with 40 ml water containing 0.20 g papain and 0.10 g of alkaline protease and the dough was rested for 30 minutes at 30°C. After the rest period, the above dough was mixed with other ingredients, specified in the above formulation, to obtain the biscuit dough. Biscuit dough was sheeted, moulded and baked. The results indicated that the biscuits prepared following this procedure were hard in texture with wrinkled and uneven surface. This could be attributed to the availabiltity of water for gluten development resulting in harder texture. And also, with this method sufficient water will not be available for dispersion of salt, ammonium bicarbonate and sodium bicarbonate. Proper dispersion of the above chemicals is necessary to avoid black specks on the surface of the biscuits.

Measurement of the physical characteristics of these biscuits showed that there was a slight decrease in the spread of the biscuits from 5.55 cm (control) to 5.47 cm. Density of the biscuits increased from 0.50 (control) to 0.62 indicating that the biscuits became harder when enzymes were incorporated in the soya flour.

### Example 2

0.2 g papain and 0.1 g alkaline protease were mixed with the blend of soy flour and wheat flour. The biscuit dough was prepared by mixing rest of the formula ingredients. The dough thus obtained was rested for 30 minutes at 30°C. The biscuit dough was then sheeted, moulded and baked.

Biscuits prepared following the above procedure showed better spread than the control biscuits which increased from 5.55 cm to 5.62 cm. Density of the biscuits decreased from 0.50 (control) to 0.49.

Subjective evaluation of the biscuits indicated in improvement in the colour of the biscuits, which was golden brown colour as against the light brown colour of control biscuits. Unlike the biscuits in example 1, these biscuits had very smooth surface and very crisp texture.

### Example 3

In order to find out the improving effect of individual enzymes, two separate experiments were conducted. In the first experiment only papain (0.2g) was used and in the second experiment only alkaline protease (0.1 g) was used. The method of incorporation of these enzymes was as in example 2.

Using papain alone in the formulation did not improve spread of the biscuits. Density of the biscuits increased from 0.50 (control) to 0.53. Inclusion of papain alone did not bring much improvement either in colour or texture of biscuits.

On the other hand, biscuits made using protease improved spread of the biscuits from 5.55 cm (control) to 5.62 cm. The density of the biscuits decreased from 0.50 (control) to 0.49. There was an improvement in both the colour and texture of the biscuits and the extent of improvement was similar tot hat observed when both papain and alkaline protease were used together. Therefore, further biscuit trials were carried out using only the alkaline protease.

### Example 4

Experiments were conducted to determine optimum level of alkaline protease required to get the desired improvement in the quality of the biscuits. The level of enzyme used were 30 mg, 40 mg and 50 mg respectively on flour weight basis.

Evaluation of the physical characteristics of the above biscuits showed that the spread of the biscuits increased with each increase in the enzyme added. Hence, diameter of biscuits containing 30, 40 and 50 mg of enzymes respectively were 5.57, 5.63 and 5.67 cm as against 5.55 cm for control biscuits. There was a decreasing trend in the density of the biscuits with each increase in incorporation of the enzyme level.

Sensory evaluation of the biscuits indicated that colour of the biscuits did not improve with the addition of 30 mg of protease. With the addition of 40 mg, the colour of the biscuits changed from light brown to golden brown colour. With further increase in addition of enzyme (50 mg) the colour of the biscuits turned slightly dark brown. All the biscuits had smooth and even surface. Texture of biscuits containing 30 mg enzyme was similar to the control biscuits, while biscuits containing 40 mg protease were very crisp in texture. Due to the fact that neither the colour nor texture of the biscuits improved with addition of 30 mg protease and also that the colour of the biscuits were adversely affected with addition of 50 mg protease, addition of 40 mg protease which improved both the colour and texture of the biscuits were decided as the optimum level of protease to be included in the biscuit formulation.

High protein biscuits thus prepared using specific protease and soy flour has the following advantages.
1. The biscuit dough containing the enzymes make the dough softer and hence improves its handling characteristics.
2. Inclusion of the enzyme in the formulation improves the textural properties of the biscuits.
3. Availability of proteins and peptides is improved as a result.

## Claims

1. A high protein nutritive cereal based food composition, comprising appropriate amount of wheat flour, defatted soya flour, sugar, fat, other conventional additives, **characterized in that** enzymes, vitamins and antioxidant based on per 100gm of wheat flour and defatted soya flour blend are present in order of:
| **Enzymes** | |
|---|---|
| Papain (mg) (tyrosine unit/g powder) | 0.20 to 0.30 |
| Alkaline protease (mg) (tyrosine unit/g powder) | 0.10 to 0.15 |
| **Vitamins** | |
|---|---|
| Thiamine hydrochloride (mg) | 4.00 to 4.20 |
| Riboflavin (mg) | 1.40 to 1.60 |
| Nicotinic acid (mg) | 18.00 to 22.00 |
| Vitamin A (acetate or palminate) (mg) | 4.00 to 6.50 |
| Vitamin D (Calciferol) (ug) | 0.25 to 0.35 |
| **Antioxidant** | |
|---|---|
| Butylated Hydroxy Anisole (BHA) (mg) | 0.40 to 0.55 |

2. A high protein nutritive cereal based food composition as claimed in claim 1 wherein the enzyme is in the form of a premix, said premix used is such as 0.20 to 0.30 mg % of papain having papain activity in the range of 1,80,000 to 1,88,000 Tyrosine unit/g of powder and 0.10 to 0.15 mg % of Alkaline protease having alkaline protease activity in the range of 30,000 to 36,000 Tyrosine unit/g of powder.

3. A high protein nutritive cereal based food composition as claimed in claim 1 which is in the form of biscuits, wherein the Wt % of the ingredients in kg used are in the range of :
| | Wt % |
|---|---|
| Wheat flour | 75.0 to 80.0 |
| Defatted soya flour | 20.0 to 26.0 |
| Sugar (powdered) | 40.0 to 48.0 |
| Fat | 20.0 to 26.0 |
| Lecithin | 0.3 to 0.5 |
| Corn syrup | 1.0 to 3.0 |
| Calcium carbonate | 0.50 to 1.00 |
| Common salt | 0.80 to 1.10 |
| Ammonium bicarbonate | 0.90 to 1.10 |
| Sodium bicarbonate | 0.40 to 0.55 |
| Acid calcium phosphate | 0.50 to 0.60 |
| Skimmed milk powder | 1.50 to 2.50 |
| Water | 18 to 20 ml |
| **Enzymes** | |
|---|---|
| Papin (mg) | 0.20 to 0.30 |
| Papain Activity (Tyrosine Unit/g powder) | 1,80,000 - 1,88,000 |
| Alkaline protease (mg) | 0.10 to 0.15 |
| Alkaline protease Activity (Tyrosine Unit / g powder) | 30,000 - 36,000 |
| **Vitamins** | |
|---|---|
| Thiamine hydrochloride (mg) | 4.00 to 4.20 |
| Riboflavin (mg) | 1.40 to 1.60 |
| Nicotinic acid (mg) | 18.00 to 12.00 |
| Vitamin A (acetate or palminate) (mg) | 4.00 to 6.50 |
| Vitamin D (Calciferol) (ug) | 0.25 to 0.35 |
| **Antioxidant** | |
|---|---|
| Butylated Hydroxy Anisole (BHA) (mg) | 0.40 to 0.55 |
| **Flouring Agent** | |
|---|---|
| Fruit based flavours | as per Prevention of Food Adulteration Act |
| Total dry matter (kg) | 151.24 - 176.56 |
| Moisture in biscuits (kg) | 4.96 - 4.96 |
| | 156.20 - 181.52 |
| Production loss (0.5% kg) | 0.78 - 0.91 |
| Production loss of aerating chemicals (0.75% kg) | 1.10 - 1.38 |
| Process deficit (0.5% kg) | 0.32 - 0.37 |
| Yield (kg) of biscuits per 100 kg flour blend | 154.00 - 176.03 |
| Equivalent to a total dough weight of | 160.00 - 190.00 kg |

4. A high protein nutritive cereal based food composition as claimed in claim 1 comprising the following ingredients.
| **Ingredient** | **Quantity** (g) |
|---|---|
| Wheat flour | 150.0 |
| Soya flour (defatted) | 50.0 |
| Sugar (powder) | 90.0 |
| Fat | 50.0 |
| Lecithin | 0.8 |
| Corn syrup | 4.0 |
| Calcium carbonaste | 2.0 |
| Common salt | 2.0 |
| Ammonium bicarbonate | 2.0 |
| Sodium bicarbonate | 1.0 |
| Acid calcium phosphate | 1.0 |
| Skimmed milk powder | 4.0 |
| Thiamine (mg) | 8.2 |
| Riboflavin (mg) | 3.0 |
| Nicotinic acid (mg) | 40.0 |
| Vitamin A (acetate of palmitate, mg) | 115.0 |
| Butylated Hydroxy Anisole (BHA, mg) | 0.6 |
| Flavours | to desired level |
| Water | 40.0 ml |

5. A process for the preparation of high protein nutritious cereal based food composition comprising the steps of:
i) creaming fat, anti oxidant (BHA), sugar, corn syrup, emulsifier, flavouring agents and fat soluble vitamins:
ii) preparing an aqueous suspension containing milk powder, common salt, ammonium bicarbonate, sodium bicarbonate and acid calcium phosphate adding to the above cream obtained in step (i) and mixing for a period of 5-8 minutes;
iii) adding a flour blend containing wheat flour, defatted soya flour, vitamins, calcium carbonate and enzyme premix to the above cream obtained in step (ii), wherein said enzyme premix is selected from 0.20 to 0.30 mg% of papain having papain activity in the range of 1,80,000 to 1,88,000 Tyrosine unit/g of powder and 0.10 to 0.15 mg% of Alkaline protease having alkaline protease activity in the range of 30,000 to 36,000 Tyrosine unit/g of powder, and mixing the resulting mass into a dry crumbly dough;
iv) resting the dough obtained in step (iii) for a period of 28-33 minutes;
v) shaping the dough using conventional rotary moulder;
vi) baking the moulded dough so obtained in step (v), and
vii) cooling the baked product.

6. A process as claimed in claim 5 wherein the Wt % of the ingredients in kg used are :
| | Wt % |
|---|---|
| Wheat flour | 75.0 to 80.0 |
| Defatted soya flour | 20.0 to 26.0 |
| Sugar (powdered) | 40.0 to 48.0 |
| Fat | 20.0 to 26.0 |
| Lecithin | 0.3 to 0.5 |
| Corn syrup | 1.0 to 3.0 |
| Calcium carbonate | 0 50 to 1.00 |
| Common salt | 0.80 to 1.10 |
| Ammonium bicarbonate | 0.90 to 1.10 |
| Sodium bicarbonate | 0.40 to 0.55 |
| Acid calcium phosphate | 0.50 to 0.60 |
| Skimmed milk powder | 1.50 to 2.50 |
| Water | 18 to 20 ml |
| **Enzymes** | |
|---|---|
| Papin (mg) | 0.20 to 0.30 |
| Papain Activity (Tyrosine Unit / g powder) | 1,80,000 - 1,88,000 |
| Alkaline protease (mg) | 0.10 to 0.15 |
| Alkaline protease Activity (Tyrosine Unit / g powder) | 30,000 - 36,000 |
| **Vitamins** | |
|---|---|
| Thiamine hydrochloride (mg) | 4.00 to 4.20 |
| Riboflavin (mg) | 1.40 to 1.60 |
| Nicotinic acid (mg) | 18.00 to 12.00 |
| Vitamin A (acetate or palminate) (mg) | 4.00 to 6.50 |
| Vitamin D (Calciferol) (ug) | 0.25 to 0.35 |
| **Antioxidant** | |
|---|---|
| Butylated Hydroxy Anisole (BHA) (mg) | 0.40 to 0.55 |
| **Flouring Agent** | |
|---|---|
| Fruit based flavours | as per Prevention of Food Adulteration Act |
| Total dry matter (kg) | 151.24 - 176.56 |
| Moisture in biscuits (kg) | 4.96 - 4.96 |
| | 156.20 - 181.52 |
| Production loss (0.5% kg) | 0.78 - 0.91 |
| Production loss of aerating chemicals (0.75% kg) | 1.10 - 1.38 |
| Process deficit (0.5% kg) | 0.32 - 0.37 |
| Yield (kg) of biscuits per 100 kg flour blend | 154.00 - 176.03 |
| Equivalent to a total dough weight of | 160.00 - 190.00 kg |

7. A process as claimed in claim 5 wherein creaming in step (i) is effected for a period in the range of 15-20 minutes.

8. A process as claimed in claim 5 wherein mixing in step (ii) is effected for a period in the range of 5-8 minutes.

9. A process as claimed in claim 5 wherein mixing in step (iii) is effected for a period in the range of 4-10 minutes.

10. A process as claimed in claim 5 wherein the backing of the products obtained in step (vi) is effected by maintaining a temperature in the range of 150-180°C of first zone, 200-260°C of second zone and 150-180°C of third zone for a total period of 4-6 minutes.

## Patentansprüche

1. Proteinreiche nahrhafte Getreidenahrungsmittelzusammensetzung mit geeigneten Mengen von Weizenmehl, entfettetem Sojamehl, Zucker, Fett, weiteren herkömmlichen Zusatzstoffen, **dadurch gekennzeichnet, dass** Enzyme, Vitamine und Antioxidans pro 100 Gramm der Mischung aus Weizenmehl und entfettetem Sojamehl im Werte von:
| **Enzyme** | |
|---|---|
| Papain (mg) | 0,20 bis 0,30 |
| (Tyrosineinheiten/g Pulver) | |
| Alkalische Protease | 0,10 bis 0,15 |
| (Tyrosineinheiten/g Pulver) | |
| **Vitamine** | |
|---|---|
| Thiamin-Hydrochlorid (mg) | 4,00 bis 4,20 |
| Riboflavin (mg) | 1,40 bis 1,60 |
| Nicotinsäure (mg) | 18,00 bis 22,00 |
| Vitamin A (-Acetat oder -Palmitat) (mg) | 4,00 bis 6,50 |
| Vitamin D (Calciferol) (µg) | 0,25 bis 0,35 |
| **Antioxidans** | |
|---|---|
| Butylhydroxyanisol (BHA) (mg) vorliegen. | 0,40 bis 0,55 |

2. Proteinreiche nahrhafte Getreidenahrungsmittelzusammensetzung wie in Anspruch 1 beansprucht, worin das Enzym als eine Vormischung vorliegt, wobei die benannte Vormischung derart ist, dass sie 0,20 bis 0,30 mg % von Papain mit einer Papainaktivität im Bereich von 180 000 bis 188 000 Tyrosineinheiten/g Pulver und 0,10 bis 0,15 mg % von alkalischer Protease mit einer alkalischen Proteaseaktivität im Bereich von 30 000 bis 36 000 Tyrosineinheiten/g Pulver besitzt.

3. Proteinreiche nahrhafte Getreidenahrungsmittelzusammensetzung wie in Anspruch 1 beansprucht, die in der Form von Keksen vorliegt, worin die Gewichtsprozente der Inhaltsstoffe pro verwendetem Kilogramm im Bereich von
| | Gew. % |
|---|---|
| Weizenmehl | 75,0 bis 80,0 |
| Entfettetes Sojamehl | 20,0 bis 26,0 |
| Zucker (Puder-) | 40,0 bis 48,0 |
| Fett | 20,0 bis 26,0 |
| Lecithin | 0,3 bis 0,5 |
| Maisstärkesirup | 1,0 bis 3,0 |
| Calciumcarbonat | 0,50 bis 1,00 |
| Speisesalz | 0,80 bis 1,10 |
| Ammoniumbicarbonat | 0,90 bis 1,10 |
| Natriumbicarbonat | 0,40 bis 0,55 |
| Saures Calciumphosphat | 0,50 bis 0,60 |
| Magermilchpulver | 1,50 bis 2,50 |
| Wasser | 18 bis 20 ml |
| **Enzyme** | |
|---|---|
| Papain (mg) | 0,20 bis 0,30 |
| Papainaktivität (Tyrosineinheiten/g Pulver) | 180 000 bis 188 000 |
| Alkalische Protease (mg) | 0,10 bis 0,15 |
| Alkalische Proteaseaktivität | 30 000 bis 36 000 |
| (Tyrosineinheiten/g Pulver) | |
| **Vitamine** | |
|---|---|
| Thiamin-Hydrochlorid (mg) | 4,00 bis 4,20 |
| Riboflavin (mg) | 1,40 bis 1,60 |
| Nicotinsäure (mg) | 18,00 bis 12,00 |
| Vitamin A (-Acetat oder -Palmitat) (mg) | 4,00 bis 6,50 |
| Vitamin D (Calciferol) (µg) | 0,25 bis 0,35 |
| **Antioxidans** | |
|---|---|
| Butylhydroxyanisol (BHA) (mg) | 0,40 bis 0,55 |
| **Aromastoff** | |
|---|---|
| Fruchtaromen | gemäss Gesetz zur Verhütung von Nahrungsmittelfälschung |
| Gesamttrockenmasse (kg) | 151,24 bis 176,56 |
| Wassergehalt in den Keksen (kg) | 4,96 bis 4,96 |
| | 156,20 bis 181,52 |
| Produktionsverlust (0,5 % kg) | 0,78 bis 0,91 |
| Produktionsverlust durch Chemikalien-durchlüftung (0,75 % kg) | 1,10 bis 1,38 |
| Prozessschwund (0,5 % kg) | 0,32 bis 0,37 |
| Ausbeute (kg) an Keksen pro 100 kg der Mehlmischung | 154,00 bis 176,03 |
| Gleichbedeutend mit einem Teig-gesamtgewicht von | 160,00 bis 190,00 kg |

4. Proteinreiche nahrhafte Getreidenahrungsmittelzusammensetzung wie in Anspruch 1 beansprucht, die folgenden Inhaltsstoffe umfassend:
| **Inhaltsstoff** | **Menge (g)** |
|---|---|
| Weizenmehl | 150,0 |
| Sojamehl (entfettet) | 50,0 |
| Zucker (Puder-) | 90,0 |
| Fett | 50,0 |
| Lecithin | 0,8 |
| Maisstärkesirup | 4,0 |
| Calciumcarbonat | 2,0 |
| Speisesalz | 2,0 |
| Ammoniumbicarbonat | 2,0 |
| Natriumbicarbonat | 1,0 |
| Saures Calciumphosphat | 1,0 |
| Magermilchpulver | 4,0 |
| Thiamin (mg) | 8,2 |
| Riboflavin (mg) | 3,0 |
| Nicotinsäure (mg) | 40,0 |
| Vitamin A (-Acetat oder -Palmitat, mg) | 115,0 |
| Butylhydroxyanisol (BHA, mg) | 0,6 |
| Aromen | zum gewünschten Niveau |
| Wasser | 40,0 ml |

5. Verfahren für die Herstellung einer proteinreichen nahrhaften Getreidenahrungsmittelzusammensetzung, die Schritte umfassend:
1. Fett, Antioxidans (BHA), Zucker, Maisstärkesirup, Emulgator, Aromastoffe und fettlösliche Vitamine kremig rühren;
2. eine wässrige Aufschlämmung zuzubereiten, die Milchpulver, Speisesalz, Ammoniumbicarbonat, Natriumbicarbonat und saures Calciumphosphat enthält, sie zu der oben in Schritt 1 erhaltenen Krem hinzuzufügen und für eine Zeitdauer von 5 bis 8 Minuten zu mischen;
3. eine Mehlmischung, die Weizenmehl, entfettetes Sojamehl, Vitamine, Calciumcarbonat und Enzymvormischung enthält, zu der oben in Schritt 2 erhaltenen Krem hinzuzufügen, worin die benannte Enzymvormischung aus 0,20 bis 0,30 mg % Papain mit einer Papainaktivität im Bereich von 180 000 bis 188 000 Tyrosineinheiten/g Pulver und 0,10 bis 0,15 mg % alkalische Protease mit einer alkalischen Proteaseaktivität im Bereich von 30 000 bis 36 000 Tyrosineinheiten/g Pulver gewählt ist, und die sich ergebende Masse zu einem trockenen, krümeligen Teig zu vermischen;
4. den in Schritt 3 erhaltenen Teig während einer Zeit von 28 bis 33 Minuten ruhen zu lassen;
5. den Teig unter Verwendung einer herkömmlichen rotierenden Formmaschine zu formen;
6. den so in Schritt 5 erhaltenen, geformten Teig zu backen; und
7. das gebackene Erzeugnis abzukühlen.

6. Verfahren, wie in Anspruch 5 beansprucht, worin die Gewichtsprozente der Inhaltsstoffe pro verwendetem Kilogramm sind:
| | Gew. % |
|---|---|
| Weizenmehl | 75,0 bis 80,0 |
| Entfettetes Sojamehl | 20,0 bis 26,0 |
| Zucker (Puder-) | 40,0 bis 48,0 |
| Fett | 20,0 bis 26,0 |
| Lecithin | 0,3 bis 0,5 |
| Maisstärkesirup | 1,0 bis 3,0 |
| Calciumcarbonat | 0,50 bis 1,00 |
| Speisesalz | 0,80 bis 1,10 |
| Ammoniumbicarbonat | 0,90 bis 1,10 |
| Natriumbicarbonat | 0,40 bis 0,55 |
| Saures Calciumphosphat | 0,50 bis 0,60 |
| Magermilchpulver | 1,50 bis 2,50 |
| Wasser | 18 bis 20 ml |
| **Enzyme** | |
|---|---|
| Papain (mg) | 0,20 bis 0,30 |
| Papainaktivität | 180 000 bis 188 000 |
| (Tyrosineinheiten/g Pulver) | |
| Alkalische Protease (mg) | 0,10 bis 0,15 |
| Alkalische Proteaseaktivität | 30 000 bis 36 000 |
| (Tyrosineinheiten/g Pulver) | |
| **Vitamine** | |
|---|---|
| Thiamin-Hydrochlorid (mg) | 4,00 bis 4,20 |
| Riboflavin (mg) | 1,40 bis 1,60 |
| Nicotinsäure (mg) | 18,00 bis 12,00 |
| Vitamin A (-Acetat oder -Palmitat) (mg) | 4,00 bis 6,50 |
| Vitamin D (Calciferol) (µg) | 0,25 bis 0,35 |
| **Antioxidans** | |
|---|---|
| Butylhydroxyanisol (BHA) (mg) | 0,40 bis 0,55 |
| **Aromastoff** | |
|---|---|
| Fruchtaromen | gemäss Gesetz zur Verhütung von Nahrungsmittelfälschung |
| Gesamttrockenmasse (kg) | 151,24 bis 176.56 |
| Wassergehalt in den Keksen (kg) | 4,96 bis 4,96 |
| | 156,20 bis 181,52 |
| Produktionsverlust (0,5 % kg) | 0,78 bis 0,91 |
| Produktionsverlust durch Chemikalien- | |
| durchlüftung (0,75 % kg) | 1,10 bis 1,38 |
| Prozessschwund (0,5 % kg) | 0,32 bis 0,37 |
| Ausbeute (kg) an Keksen pro 100 kg der Mehlmischung | 154,00 bis 176,03 |
| Gleichbedeutend mit einem Teig-gesamtgewicht von | 160,00 bis 190,00 kg |

7. Verfahren wie in Anspruch 5 beansprucht, worin das Kremigrühren im Schritt 1 über eine Zeitdauer im Bereich von 15 bis 20 Minuten ausgeführt wird.

8. Verfahren wie in Anspruch 5 beansprucht, worin das Mischen im Schritt 2 über eine Zeitdauer im Bereich von 5 bis 8 Minuten ausgeführt wird.

9. Verfahren wie in Anspruch 5 beansprucht, worin das Mischen im Schritt 3 über eine Zeitdauer im Bereich von 4 bis 10 Minuten ausgeführt wird.

10. Verfahren wie in Anspruch 5 beansprucht, worin das Backen der in Schritt 6 erhaltenen Produkte ausgeführt wird, indem eine Temperatur im Bereich von 150 bis 180 °C in der ersten Zone, von 200 bis 260 °C in der zweiten Zone und 150 bis 180 °C in der dritten Zone über eine Gesamtzeitdauer von 4 bis 6 Minuten aufrechterhalten wird.

## Revendications

1. Une composition de nourriture nutritive à haute valeur protéique à base de céréales, comportant la quantité appropriée de farine de blé, de farine de soja dégraissée, de sucre, de graisse, d'autres additifs conventionnels, **caractérisés en ce que** les enzymes, les vitamines et l'antioxydant basé sur 100mg de farine de blé et de mélange dégraissé de farine de soja sont présents dans l'ordre de:
| **Enzymes** | |
|---|---|
| Papaïne (mg) | 0.20 à 0.30 |
| (unité de tyrosine/g de poudre) | |
| Protéase alcaline (mg) | 0.10 à 0.15 |
| (unité de tyrosine/g de poudre) | |
| **Vitamines** | |
|---|---|
| Chlorhydrate de thiamine (mg) | 4.00 à 4.20 |
| Riboflavine (mg) | 1.40 à 1.60 |
| Acide nicotinique (mg) | 18.00 à 22.00 |
| Vitamine A (acétate ou palminate) (mg) | 4.00 à 6.50 |
| Vitamine D (Calciférol) (ug) | 0.25 à 0.35 |
| **Antioxydant** | |
|---|---|
| Anisol Hydroxy Butylé | 0.40 à 0.55 |
| (BHA) (mg) | |

2. Une composition de nourriture nutritive à haute valeur protéique à base de céréales selon la revendication 1, où l'enzyme est sous forme de prémélange, ledit prémélange utilisé est tel que 0.20 à 0.30 mg% de papaïne possèdent une activité papaïne dans la gamme de 1,80,000 à 1,88,000 Tyrosine unités/g de poudre et que 0.10 à 0.15 mg% de protéase alcaline possèdent une activité protéase alcaline dans la gamme de 30,000 à 36,000 Tyrosine unités/g de poudre.

3. Une composition de nourriture nutritive à haute valeur protéique à base de céréales selon la revendication 1 qui est sous forme de biscuits, où le poids % des ingrédients en kilogramme utilisé est dans la gamme de:
| | Poids % |
|---|---|
| Farine de blé | 75.0 à 80.0 |
| Farine de soja (dégraissée) | 20.0 à 26.0 |
| Sucre (en poudre) | 40.0 à 48.0 |
| Graisse | 20.0 à 26.0 |
| Lécithines | 0.3 à 0.5 |
| Sirop de maïs | 1.0 à 3.0 |
| Carbonate de calcium | 0.50 à 1.00 |
| Sel commun | 0.80 à 1.10 |
| Bicarbonate d'ammonium | 0.90 à 1.10 |
| Bicarbonate de soude | 0.40 à 0.55 |
| Phosphate acide de calcium | 0.50 à 0.60 |
| Lait écrémé en poudre | 1.50 à 2.50 |
| Eau | 18 à 20 ml |
| **Enzymes** | |
|---|---|
| Papaye (mg) | 0.20 à 0.30 |
| Activité de la Papaye | 1,80,000-1,88,000 |
| (unité de tyrosine/g de poudre) | |
| Protéase Alcaline (mg) | 0.10 à 0.15 |
| Activité Protéase Alcaline | 30,000-36,000 |
| (unité de tyrosine/g de poudre) | |
| **Vitamines** | |
|---|---|
| Chlorhydrate de thiamine (mg) | 4.00 à 4.20 |
| Riboflavine (mg) | 1.40 à 1.60 |
| Acide nicotinique (mg) | 18.00 à 12.00 |
| Vitamine A (acétate ou palminate) (mg) | 4.00 à 6.50 |
| Vitamine D (Calciférol) (ug) | 0.25 à 0.35 |
| **Antioxydant** | |
|---|---|
| Anisole hydroxy butylé (BHA) (mg) | 0.40 à 0.55 |
| **Agents aromatisants** | |
|---|---|
| Arômes à base de fruit | comme par Prévention d'Acte d'Adultération de Nourriture |
| Matière sèche totale (kilogramme) | 151.24-176.56 |
| Humidité en biscuits (kilogramme) | 4.96-4.96 |
| | 156,20-181.52 |
| Perte de production (0. 5%, kilogramme) | 0.78-0.91 |
| Perte de production d'aération des produits chimiques (0. 75%, kilogramme) | 1.10-1.38 |
| Déficit de processus (0. 5%, kilogramme) | 0.32-0.37 |
| Rendement (Kg) de biscuits par 100Kg de mélange de farine | 154.00-176.03 |
| Équivalent à un poids total de pâte de | 160.00-190.00 Kg |

4. Une composition de nourriture nutritive à haute valeur protéique à base de céréales selon la revendication 1, comportant les ingrédients suivants.
| **Ingrédient** | **Quantité** |
|---|---|
| | (g) |
| Farine de blé | 150.0 |
| Farine de soja (dégraissée) | 50.0 |
| Sucre (poudre) | 90.0 |
| Graisse | 50.0 |
| Lécithine | 0.8 |
| Sirop de maïs | 4.0 |
| Carbonate de calcium | 2.0 |
| Sel commun | 2.0 |
| Bicarbonate d'ammonium | 2.0 |
| Bicarbonate de soude | 1.0 |
| Phosphate acide de calcium | 1.0 |
| Lait écrémé en poudre | 4.0 |
| Thiamine (mg) | 8.2 |
| Riboflavine (mg) | 3.0 |
| Acide nicotinique (mg) | 40.0 |
| Vitamine A (acétate de palmitate, mg) | 115.0 |
| Anisole hydroxy butylé (BHA, mg) | 0.6 |
| Arômes | au niveau désiré |
| Eau | 40.0 ml |

5. Un procédé pour la préparation d'une composition de nourriture nutritive à haute valeur protéique à base de céréales, comportant les étapes de:
a. Ecrémage de gras, anti-oxydant, sucre, sirop de maïs, émulsifiant, aromatisants et vitamines solubles de graisse;
b. Préparation d' une suspension aqueuse contenant le lait en poudre, le sel commun, le bicarbonate d'ammonium, le bicarbonate de soude et le phosphate de calcium d'acide, s'ajoutant à la crème ci-dessus obtenue dans l'étape (i) et se mélangeant pour une période de 5-8 minutes;
c. Ajout d'un mélange de farine contenant la farine de blé, la farine de soja dégraissée, les vitamines, le carbonate de calcium et le prémélange d'enzymes à la crème ci-dessus obtenue dans l'étape (ii), où ledit prémélange utilisé est tel que 0.20 à 0.30 mg% de papaïne possèdent une activité papaïne dans la gamme de 1,80,000 à 1,88,000 Tyrosine unités/g de poudre et que 0.10 à 0.15 mg% de protéase alcaline possèdent une activité protéase alcaline dans la gamme de 30,000 à 36,000 Tyrosine unités/g de poudre, et mélangeant la masse résultante dans une pâte friable sèche;
d. Repos de la pâte obtenue en étape (iii) pendant une période de 28-33 minutes;
e. Formation de la pâte à l'aide du mouleur rotatoire conventionnel;
f. Cuisson de la pâte moulée obtenue dans l'étape (v) ;
g. Refroidissement du produit cuit.

6. Un processus selon la revendication 5, où le poids % des ingrédients en kilogramme utilisé sont:
| | Poids % |
|---|---|
| Farine de blé | 75.0 à 80.0 |
| Farine de soja (dégraissée) | 20.0 à 26.0 |
| Sucre (en poudre) | 40.0 à 48.0 |
| Graisse | 20.0 à 26.0 |
| Lécithines | 0.3 à 0.5 |
| Sirop de maïs | 1.0 à 3.0 |
| Carbonate de calcium | 0.50 à 1.00 |
| Sel commun | 0.80 à 1.10 |
| Bicarbonate d'ammonium | 0.90 à 1.10 |
| Bicarbonate de soude | 0.40 à 0.55 |
| Phosphate acide de calcium | 0.50 à 0.60 |
| Lait écrémé en poudre | 1.50 à 2.50 |
| Eau | 18 à 20 ml |
| **Enzymes** | |
|---|---|
| Papaye (mg) | 0.20 à 0.30 |
| Activité de la Papaye | 1,80,000-1,88,000 |
| (unité de tyrosine/g de poudre) | |
| Protéase Alcaline (mg) | 0.10 à 0.15 |
| Activité Protéase Alcaline | 30,000-36,000 |
| (unité de tyrosine/g de poudre) | |
| **Vitamines** | |
|---|---|
| Chlorhydrate de thiamine (mg) | 4.00 à 4.20 |
| Riboflavine (mg) | 1.40 à 1.60 |
| Acide nicotinique (mg) | 18.00 à 12.00 |
| Vitamine A (acétate ou palminate) (mg) | 4.00 à 6.50 |
| Vitamine D (Calciférol) (ug) | 0.25 à 0.35 |
| **Antioxydant** | |
|---|---|
| Anisole hydroxy butylé (BHA) (mg) | 0.40 à 0.55 |
| Agents aromatisants | |
|---|---|
| Arômes à base de fruit | comme par Prévention d'Acte d'Adultération de Nourriture |
| Matière sèche totale (kilogramme) | 151.24-176.56 |
| Humidité en biscuits (kilogramme) | 4.96-4.96 |
| | 156,20-181.52 |
| Perte de production (0. 5%, kilogramme) | 0.78-0.91 |
| Perte de production d'aération des produits chimiques (0. 75%, kilogramme) | 1.10-1.38 |
| Déficit de processus (0. 5%, kilogramme) | 0.32-0.37 |
| Rendement (Kg) de biscuits par 100Kg de mélange de farine | 154.00-176.03 |
| Équivalent à un poids total de pâte de | 160.00-190.00 Kg |

7. Un procédé selon la revendication 5, où l'écrémage dans l'étape (i) est effectué pendant une période de l'ordre de 15-20 minutes.

8. Un procédé selon la revendication 5, où le mélange dans l'étape (ii) est effectué pendant une période de l'ordre de 5-8 minutes.

9. Un procédé selon la revendication 5, où le mélange dans l'étape (iii) est effectué pendant une période de l'ordre de 4-10 minutes.

10. Un procédé selon la revendication 5, où la cuisson des produits obtenus dans l'étape (vi) est effectuée en maintenant une température de l'ordre de 150-180°C dans un premier temps, de l'ordre de 200-260°C dans un deuxième temps et de l'ordre de 150-180°C dans un troisième temps pour une période totale de 4-6 minutes.
